(19) Europäisches Patentamt
European Patent Office
Office européen des brevets

(11) **EP 3 853 108 B1**

(12) **EUROPÄISCHE PATENTSCHRIFT**

(45) Veröffentlichungstag und Bekanntmachung des Hinweises auf die Patenterteilung:
**30.03.2022 Patentblatt 2022/13**

(21) Anmeldenummer: **19769139.7**

(22) Anmeldetag: **13.09.2019**

(51) Internationale Patentklassifikation (IPC):
**B62D 5/04** (2006.01)

(52) Gemeinsame Patentklassifikation (CPC):
**B62D 6/008; B62D 5/0463**

(86) Internationale Anmeldenummer:
**PCT/EP2019/074519**

(87) Internationale Veröffentlichungsnummer:
**WO 2020/058126 (26.03.2020 Gazette 2020/13)**

(54) **ANPASSUNG DES LENKGEFÜHLS IN ABHÄNGIGKEIT VON DER LENKGESCHWINDIGKEIT**

ADJUSTMENT OF THE STEERING FEEL SUBJECT TO THE STEERING SPEED

ADAPTATION DE LA SENSATION DE DIRECTION EN FONCTION DE LA VITESSE DE DIRECTION

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **21.09.2018 DE 102018123291**

(43) Veröffentlichungstag der Anmeldung:
**28.07.2021 Patentblatt 2021/30**

(73) Patentinhaber:
- **thyssenkrupp Presta AG**
  **9492 Eschen (LI)**
- **thyssenkrupp AG**
  **45143 Essen (DE)**

(72) Erfinder: **SZEPESSY, Imre**
**9493 Mauren (LI)**

(74) Vertreter: **thyssenkrupp Intellectual Property GmbH**
**ThyssenKrupp Allee 1**
**45143 Essen (DE)**

(56) Entgegenhaltungen:
**DE-A1- 10 325 587      US-A1- 2003 121 713**
**US-A1- 2004 226 770**

**Beschreibung**

Die vorliegende Erfindung betrifft ein Verfahren zum Betreiben einer Lenkung eines Kraftfahrzeuges mit den Merkmalen des Oberbegriffs des Anspruchs 1 und Lenksysteme für Kraftfahrzeuge mit den Merkmalen der Oberbegriffe der Ansprüche 10 und 13.

Es ist bekannt in EPS (Electric Power Steering) Systemen oder Steer-by-Wire-Lenksystemen Lenkungseigenschaften und das Lenkgefühl zu beeinflussen, um den Fahrkomfort für den Fahrer zu erhöhen. Dabei wird ein Handmoment, das an einem Lenkmittel, beispielsweise einem Lenkrad angelegt wird, ermittelt, um die von dem Fahrer aufgebrachte Kraft zu unterstützen oder der von dem Fahrer aufgebrachten Kraft entgegenzuwirken. Damit kann dem Fahrer ein der aktuellen Fahrsituation entsprechendes Fahrgefühl vermittelt werden.

Bei einem Steer-by-Wire-Lenksystem wird das Lenkgefühl mittels eines Feedback-Aktuators erzeugt. Bei einem EPS-System, bei dem eine mechanische Verbindung zwischen dem Lenkrad und den zu lenkenden Rädern besteht, sind Regelungskonzepte bekannt, die das Einregeln eines dem Handmoment entsprechenden Lenkmoments zur Erzeugung eines gewünschten Lenkgefühls am Lenkrad ermöglichen. Hierzu wird ein Elektromotor oder eine elektromechanische Servoeinheit derart angesteuert bzw. eingeregelt, dass sich ein dem gewünschten Handmoment entsprechendes Lenkmoment einstellt.

Ein Steer-by-Wire-Lenksystem ist im Stand der Technik beispielsweise aus der US 20030121713 A1 bekannt. Ein weiteres Lenksystem ist aus der US 20040226770 A1 bekannt, die offenbart, eine Lenkunterstützung entsprechend dem Verlauf einer vorgegebenen Kennlinie, die eine Lenkwinkelgeschwindigkeit berücksichtigt, anzupassen. Zudem offenbart die DE 103 25 587 A1 eine Fahrzeuglenkregelungsvorrichtung mit einem Lenkgegenkraft-Anpassmechanismus, die ausgebildet ist, den Lenkgegenkraft-Anpassmechanismus in Abhängigkeit von einem durch eine Lenkoperation ausgeübten Drehmoments und einer Lenkgeschwindigkeit, bei welcher die Lenkoperation ausgeführt wird, zu regeln.

Es kann in bestimmten Fahrzuständen beziehungsweise in einigen Fahrsituationen vorkommen, dass kein zufriedenstellendes Lenkgefühl bereitgestellt wird. So ist insbesondere bei hohen Lenkgeschwindigkeiten die Änderung der Unterstützung bzw. des am Lenkrad anliegenden Gegenmomentes für den Fahrer spürbar. Diese starke Änderung führt zu einer Verunsicherung des Fahrers und ist daher unerwünscht.

Es ist Aufgabe der vorliegenden Erfindung, ein Lenksystem für Kraftfahrzeuge anzugeben, das ein verbessertes und konsistenteres Lenkgefühl bei hohen Lenkgeschwindigkeiten bereitstellt.

Diese Aufgabe wird von einem Verfahren zum Betreiben einer Lenkung eines Kraftfahrzeuges mit den Merkmalen des Anspruchs 1 und von Lenksystemen für Kraftfahrzeuge mit den Merkmalen der Ansprüche 10 und 13 gelöst. Weitere vorteilhafte Ausbildungen der Erfindung sind den Unteransprüchen zu entnehmen.

Demnach ist ein Verfahren zum Betreiben einer Lenkung eines Kraftfahrzeuges, bei dem in Abhängigkeit eines an einer Lenkungshandhabe aufgebrachten fahrerseitigen Handmoments eine Lenkkraftunterstützung oder ein von einem Feedback-Aktuator in die Lenkungshandhabe eingebrachtes Gegendrehmoment ein Lenkgefühl erzeugt, vorgesehen, wobei das Lenkgefühl mittels einer Kennlinie dargestellt ist, die in Abhängigkeit von der Lenkgeschwindigkeit bei Lenkgeschwindigkeiten über 150°/s, insbesondere über 200°/s und besonders bevorzugt in einem Bereich von 200°/s bis 300°/s, angepasst wird, derart, dass die angepasste Kennlinie eine kleinere maximale Änderung der Steigung aufweist, als die Kennlinie bei niedrigeren Lenkgeschwindigkeiten.

Ein unerwarteter Anstieg eines spürbaren Momentes am Lenkrad kann so bei hohen Lenkgeschwindigkeiten verhindert werden. Das Lenkgefühl wird dadurch deutlich verbessert.

In einer bevorzugten Ausführungsform umfasst die Anpassung der Kennlinie eine Neuskalierung der X-Achse, insbesondere in dem Bereich des Nulldurchgangs der Kennlinie.

Bei den Kennlinien handelt es sich bevorzugt um Basisfunktionen.

In einem Ausführungsbeispiel ist die Lenkung eine elektromechanische Lenkung und die Kennlinie eine Basisdrehmomentkurve oder eine Lenksäulendrehmomentsteuerungskurve.

Es kann auch vorgesehen sein, dass die Lenkung eine Steer-by-Wire-Lenkung ist und die Kennlinie die Abhängigkeit des vom Feedback-Aktuator bereitgestellten Lenkmoments von dem Lenkwinkel wiedergibt.

Die Anpassung der Kennlinie kann eine Addition einer Konstanten umfassen, die insbesondere von der Lenkgeschwindigkeit abhängig sein kann.

Weiterhin ist ein Steer-by-Wire-Lenksystem für Kraftfahrzeuge mit einem auf die gelenkten Räder wirkenden, in Abhängigkeit von einem Fahrerlenk-wunsch elektronisch geregelten Lenksteller, der mittels eines Zahnstangen-Lenkgetriebes auf die gelenkten Räder wirkt, mit einem Rückwirkungen der Straße auf ein Lenkrad übertragenden Feedback-Aktuator, vorgesehen, wobei der Feedback-Aktuator ein Lenkmoment in Abhängigkeit eines Lenkwinkels mittels wenigstens zweier Kennlinien bereitstellt, und wobei eine erste Kennlinie für hohe Lenkgeschwindigkeiten und eine zweite Kennlinie für niedrigere Lenkgeschwindigkeiten vorgesehen sind, wobei die erste Kennlinie eine kleinere maximale Änderung der Steigung aufweist, als die zweite Kennlinie. Wie bereits oben beschrieben, ergibt sich dadurch ein deutlich verbessertes Lenkgefühl.

Vorzugsweise wird die erste Kennlinie mittels der zweiten Kennlinie berechnet.

Die Anpassung der Kennlinie umfasst eine Addition einer Konstanten, die insbesondere von der Lenkgeschwindigkeit abhängig sein kann.

Weiterhin ist ein elektromechanisches Lenksystem für ein Kraftfahrzeug aufweisend ein mit einer unteren Lenkwelle verbundenes Lenkritzel, welches mit einer in einem Gehäuse entlang einer Längsachse verschieblich gelagerten Zahnstange zur Lenkung von Rädern in Eingriff steht, wenigstens einen Elektromotor zur Lenkkraftunterstützung, vorgesehen, wobei die Lenkkraftunterstützung mittels wenigstens zweier Kennlinien, die Basisdrehmomentkurven oder Lenksäulendrehmomentsteuerungskurven sind, bestimmt ist, und wobei eine erste Kennlinie für hohe Lenkgeschwindigkeiten und eine zweite Kennlinie für niedrigere Lenkgeschwindigkeiten vorgesehen sind, wobei die erste Kennlinie eine kleinere maximale Änderung der Steigung aufweist, als die zweite Kennlinie. Wie bereits oben beschrieben, ergibt sich dadurch ein deutlich verbessertes Lenkgefühl.

Vorzugsweise wird die erste Kennlinie mittels der zweiten Kennlinie durch Skalierung der X-Achse berechnet, dabei ist es bevorzugt, wenn bei Verwendung einer Basisdrehmomentkurve die X-Achse gestreckt ist und bei Verwendung einer Lenksäulendrehmomentsteuerungskurve die X-Achse gestaucht ist.

Bevorzugte Ausführungsformen der Erfindung werden nachfolgend anhand der Zeichnungen näher erläutert. Gleichartige oder gleichwirkende Bauteile werden in den Figuren mit denselben Bezugszeichen bezeichnet. Es zeigen:

Fig. 1: eine schematische Darstellung einer Lenksäulendrehmomentsteuerungskurve einer elektromechanischen Kraftfahrzeuglenkung,

Fig. 2: eine schematische Darstellung einer Basisdrehmomentkurve einer elektromechanischen Kraftfahrzeuglenkung, sowie

Fig. 3: eine schematische Darstellung eines Verlaufs eines am Lenkrad anliegenden Gegendrehmomentes in Abhängigkeit eines Lenkwinkels in einer Steer-by-Wire-Lenkung.

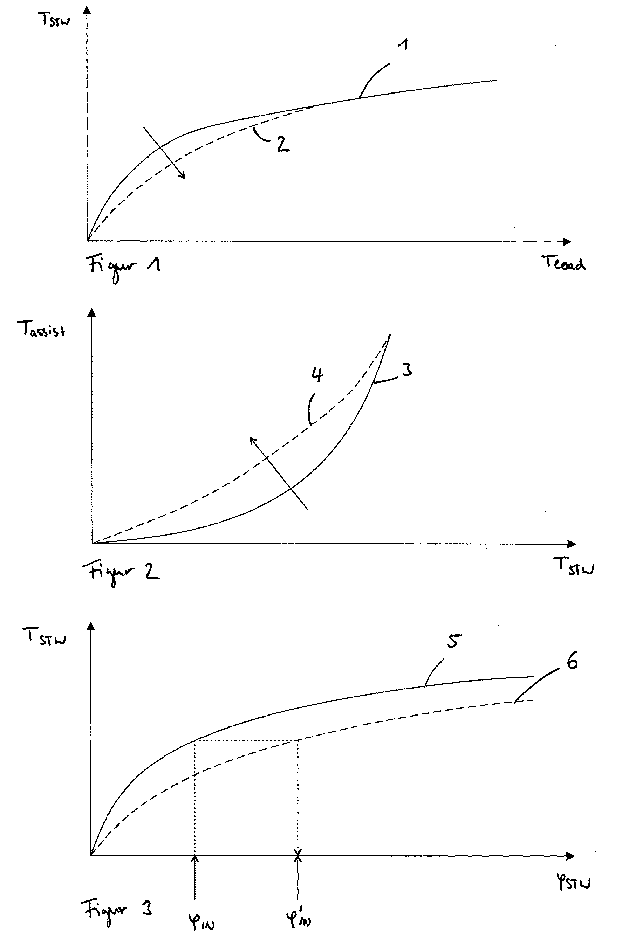

Die Figuren 1 und 2 zeigen zwei unterschiedliche Steuerungsarten eines Lenkgefühls einer elektromechanischen Kraftfahrzeuglenkung. Dabei handelt es sich um Basisfunktionen, die eine angemessene Lenkunterstützung einer klassischen Servolenkung sicherstellen, wie sie auch durch hydraulische Lenksysteme bekannt ist. Zusätzliche nicht dargestellte Funktionskomponenten sorgen dafür, dass Rückmeldungen der Fahrbahn trotz der Reibung in den Lagern oder der Trägheit der beweglichen Bauteile einer Lenkung für den Fahrer als spürbare Information zur Verfügung stehen. Hierzu zählen unter anderem eine aktive Rücklaufregelung des Lenkrads in die Mittelposition sowie eine Geradeauslaufkorrektur, um beispielsweise bei einer quergeneigten Fahrbahn das erforderliche Gegenlenken des Fahrers zu erleichtern. Es sind auch noch weitere Funktionskomponenten denkbar.

Figur 1 zeigt eine Abhängigkeit eines Lenkmoments $T_{STW}$ von einer geschätzten Zahnstangenkraft $T_{load}$. Das Lenkmoment $T_{STW}$ ist das am Lenkrad aufzubringende Drehmoment, das zum Erreichen der Zahnstangenkraft $T_{load}$ benötigt wird. Dieser Verlauf dient als Basis für einen Lenksäulendrehmomentsteuerungsalgorithmus (engl. column torque control algorithms), der das Unterstützungsmoment eines Elektromotors in einer elektromechanischen Kraftfahrzeuglenkung regelt.

Die Basisfunktion kann, wie bereits oben beschrieben, zusätzliche Funktionskomponenten wie eine Abhängigkeit von der Fahrzeuggeschwindigkeit aufweisen. Für niedrige Fahrzeuggeschwindigkeiten sind niedrige Lenkmomente über den gesamten Bereich der Zahnstangenkraft wünschenswert. Das führt dazu, dass die Lenkung leichtgängig beispielsweise beim Parkieren ist. Bei höheren Fahrzeuggeschwindigkeiten ist hingegen ein größeres Lenkmoment vorgesehen, um die gewünschte Zahnstangenkraft aufzubringen. Die Lenkunterstützung ist geringer. Die Lenkbewegungen sind daher schwergängiger und direkter.

Das Lenkgefühl wird erfindungsgemäß dadurch optimiert, dass in Abhängigkeit von einer Lenkgeschwindigkeit $\dot{\varphi}_{STW}$ ein unterschiedliches Lenkgefühl bereitgestellt wird. Figur 1 zeigt einen herkömmlichen Verlauf 1 (durchgehende Linie) und ein adaptiertes Lenkgefühl 2 für hohe Lenkgeschwindigkeiten (gestrichelte Linie). Die Lenkgeschwindigkeit $\dot{\varphi}_{STW}$ ist die zeitliche Änderung des Lenkwinkels. Hohe Lenkgeschwindigkeiten sind Lenkgeschwindigkeiten in einem Bereich von 200°/s-300°/s. Der herkömmliche Verlauf gibt das Lenkgefühl bei niedrigen Lenkgeschwindigkeiten in einem Bereich von 0-50°/s wieder. Der Pfeil zeigt die Änderung des Lenkgefühls zu hohen Lenkgeschwindigkeiten hin an.

Der herkömmliche Verlauf 1 ist wurzelfunktionsartig; nach einem steilen Anstieg in einem Bereich von 1-5 Nm des Lenkmomentes $T_{STW}$ bei kleinen Zahnstangenkräften flacht die Kurve stark ab und ist nahezu linear. Der Anstieg ist abhängig vom Lenkgefühlsprofil, das je nach Fahrzeug unterschiedlich ist. Die Lenkunterstützung ist bei kleinen Zahnstangenkräften gering und bei großen Zahnstangenkräften groß.

Bei hohen Lenkgeschwindigkeiten 2 ist der Anstieg im Bereich kleiner Zahnstangenkräfte deutlich flacher und geht bei höheren Zahnstangenkräften in die Kurve für niedrigere Lenkgeschwindigkeiten über. Anders gesagt, die Steigung ist deutlich kleiner bei kleinen Zahnstangenkräften und der Verlauf der Kurve weist über einen größeren Bereich eine nahezu konstante Steigung auf. Bei hohen Lenkgeschwindigkeiten wird somit vermieden, dass der Fahrer den starken Anstieg des aufzubringenden Lenkmomentes bei kleinen Zahnstangenkräften bemerkt und dadurch irritiert wird. Die Steigung der Kennlinie überschreitet daher einen vorbestimmten Grenzwert nicht, wodurch die Kennlinie 2 deutlich flacher ist als die Kennlinie für niedrigere Lenkgeschwindigkeiten 1.

Anstelle der Zahnstangenkraft kann das Basislenkmoment auch von einer anderen, die Seitenführungskräfte der Reifen repräsentierenden Größe, abhängen. Hier ist beispielsweise die Querbeschleunigung anstelle der Zahnstangenkraft eine geeignete Größe. Das Basislenkmoment kann zudem auch von anderen Größen, wie dem Lenkwinkel, dem Lenkradwinkel oder der Gierrate berechnet werden.

Figur 2 zeigt eine Basisdrehmomentkurve 3 (engl. boost curve), die ein Basis-Unterstützungsmoment $T_{assist}$ als Funktion von einem am Lenkrad anliegenden Lenkmoment $T_{STW}$ angibt. Die Kennlinie 3 stellt eine Basis dar, die ebenfalls noch um weitere Funktionskomponenten erweitert werden kann. Ein Algorithmus berechnet mittels der Basisdrehmomentkurve 3 anhand des vom Fahrer aufgebrachten Lenkmomentes $T_{STW}$ ein Drehmoment $T_{assist}$ das zur Unterstützung der Lenkbewegung aufgebracht wird. Ein herkömmlicher Verlauf der Basisdrehmomentkurve 3 (durchgehende Linie) und ein adaptiertes Lenkgefühl für hohe Lenkgeschwindigkeiten 4 (gestrichelte Linie) sind dargestellt. Der Pfeil zeigt die Änderung des Lenkgefühls zu hohen Lenkgeschwindigkeiten hin an. Bei der herkömmlichen Basisdrehmomentkurve 3 ist die Unterstützung bei kleinen Lenkmomenten um Null herum sehr gering.

Die Unterstützung steigt ab einem Lenkmoment von 0-1 Nm stark an und hat ab einem Lenkmoment von 3-4 Nm eine nahezu konstante Steigung. Die Kennlinie für hohe Lenkgeschwindigkeiten 4 sieht daher einen Verlauf vor, bei dem die Änderungen des Verlaufs deutlich kleiner sind und somit diese für den Fahrer nicht spürbar sind. Die Kennlinie weist eine Steigung auf, die in einem Bereich von 0,5 bis 1 liegt und sich nur geringfügig über den Bereich des Lenkmoments ändert. In anderen Worten, die maximale Änderung der Steigung ist begrenzt.

Figur 3 zeigt eine Kennlinie 5 für ein Lenkgefühl eines Steer-by-Wire-Lenksystems. Bei Steer-by-Wire-Lenksystemen ist die Stellung der gelenkten Räder nicht direkt mit dem Lenkrad gekoppelt. Es besteht eine Verbindung zwischen dem Lenkrad und den gelenkten Rädern über elektrische Signale.

Der Fahrerlenkwunsch wird von einem Lenkwinkelsensor abgegriffen und in Abhängigkeit des Fahrerlenkwunsches wird über einen Lenksteller die Stellung der gelenkten Räder geregelt. Eine mechanische Verbindung zu den Rädern ist nicht vorgesehen, sodass nach Betätigung des Lenkrads eine Kraft-Rückmeldung fehlt, z.B. eine entsprechende Rückmeldung beim Einparken, wo aus Komfortgründen ein geringer Kraftaufwand gewünscht ist, oder bei einer üblichen Geradeausfahrt, bei der ein der Fahrzeugreaktion entsprechendes höheres Lenkmoment gewünscht ist. Um bei Steer-by-Wire-Lenkungen die Rückmeldungen der Straße auf das Lenkrad zu simulieren, ist es notwendig am Lenkrad bzw. der Lenksäule einen Feedback-Aktuator (FBA) vorzusehen, welcher in Abhängigkeit von den Rückwirkungen der Lenkhandhabe ein Lenkgefühl aufprägt.

Die dargestellte Kennlinie 5 zeigt den Basis-Verlauf des vom Feedback-Aktuator vorgegebenen Lenkdrehmoments $T_{STW}$ über dem Lenkraddrehwinkel $\varphi_{STW}$ für normale Lenkgeschwindigkeiten (durchgezogene Linie) und hohe Lenkgeschwindigkeiten 6 (gestrichelte Linie). Bei normalen Lenkgeschwindigkeiten und kleinen Lenkraddrehwinkeln steigt das Gegendrehmoment stark an. Die Kurve flacht bei höheren Lenkraddrehwinkeln ab und geht in eine nahezu lineare Kurve mit konstanter Steigung über.

Analog zur Lenksäulendrehmomentsteuerungskurve bei elektromechanischen Kraftfahrzeuglenkung flacht die Kurve für hohe Lenkgeschwindigkeiten ab, so dass die Steigung einen vorgegeben Wert nicht überschreitet und über den gesamten Lenkwinkel-Bereich gleichmäßiger ist. In anderen Worten, die maximale Änderung der Steigung ist begrenzt.

Die angepasste Kennlinie kann mittels der ursprünglichen Kennlinie für niedrige Lenkgeschwindigkeiten durch Neuskalierung der X-Achse, insbesondere Dehnung der X-Achse gewonnen werden. Es kann auch vorgesehen sein, dass ausgehend von der Kennlinie für niedrige Lenkgeschwindigkeiten eine Kennlinie für hohe Lenkgeschwindigkeiten entsprechend der folgenden Gleichungen berechnet wird:

$$\varphi'_{IN} = \varphi_{IN} + b0,$$

wobei $\varphi_{IN}$ ein Lenkwinkel auf der Kennlinie für niedrige Lenkgeschwindigkeiten bei einem vorgegebenen Gegendrehmoment, $\varphi'_{IN}$ ein Lenkwinkel auf der Kennlinie für hohe Lenkgeschwindigkeiten bei demselben vorgegebenen Gegendrehmoment und b0 eine Konstante ist, die mit der Lenkgeschwindigkeit ansteigen kann. Es kann auch vorgesehen sein, dass b0 eine Funktion des Lenkwinkels ist: b0= f($\dot{\varphi}$). Die Kennlinie für hohe Lenkgeschwindigkeiten kann auch entsprechend der folgenden Gleichungen berechnet werden:

$$\varphi'_{IN} = \varphi_{IN} + k \cdot \dot{\varphi},$$

wobei $\varphi_{IN}$ ein Lenkwinkel auf der Kennlinie für niedrige Lenkgeschwindigkeiten bei einem vorgegebenen Gegendrehmoment, $\varphi'_{IN}$ ein Lenkwinkel auf der Kennlinie für hohe Lenkgeschwindigkeiten bei demselben vorgegebenen Gegendrehmoment, k eine Konstante ist und $\dot{\varphi}$ die Lenkgeschwindigkeit.

Niedrige Lenkgeschwindigkeiten sind dabei Lenkgeschwindigkeiten in einem Bereich von 0-50°/sec. In einer bevorzugten Ausführungsform handelt es sich bei niedrigen Lenkgeschwindigkeiten um eine Lenkgeschwindigkeit gleich Null.

**Patentansprüche**

1. Verfahren zum Betreiben einer Lenkung eines Kraftfahrzeuges, bei dem in Abhängigkeit eines an einer Lenkungshandhabe aufgebrachten fahrerseitigen Handmoments eine Lenkkraftunterstützung oder ein von einem Feedback-Aktuator in die Lenkungshandhabe eingebrachtes Gegendrehmoment ein Lenkgefühl erzeugt, wobei das Lenkgefühl mittels einer Kennlinie (1,2,3,4,5,6) dargestellt ist, die in Abhängigkeit von der Lenkgeschwindigkeit ($\dot{\varphi}_{STW}$) angepasst wird, **dadurch gekennzeichnet, dass** die Kennlinie (1,3,5) bei Lenkgeschwindigkeiten über 150°/s angepasst wird, derart, dass die angepasste Kennlinie (2,4,6) eine kleinere maximale Änderung der Steigung aufweist, als die Kennlinie bei niedrigeren Lenkgeschwindigkeiten (1,3,5).

2. Verfahren nach Anspruch 1, **dadurch gekennzeichnet, dass** die Anpassung der Kennlinie bei Lenkgeschwindigkeiten über 200°/s erfolgt.

3. Verfahren nach Anspruch 1 oder 2, **dadurch gekennzeichnet, dass** die Anpassung der Kennlinie bei Lenkgeschwindigkeiten in einem Bereich von 200°/s bis 300°/s erfolgt.

4. Verfahren nach einem der vorhergehenden Ansprüche, **dadurch gekennzeichnet, dass** die Anpassung der Kennlinie eine Neuskalierung der X-Achse umfasst.

5. Verfahren nach einem der vorhergehenden Ansprüche, **dadurch gekennzeichnet, dass** die Anpassung der Kennlinie eine Neuskalierung der X-Achse in dem Bereich des Nulldurchgangs der Kennlinie umfasst.

6. Verfahren nach einem der vorhergehenden Ansprüche, **dadurch gekennzeichnet, dass** die Kennlinien (1,2,3,4,5,6) Basisfunktionen sind.

7. Verfahren nach einem der vorhergehenden Ansprüche, **dadurch gekennzeichnet, dass** die Lenkung eine elektromechanische Lenkung ist und die Kennlinie eine Basisdrehmomentkurve (3,4) oder eine Lenksäulendrehmomentsteuerungskurve (1,2) ist.

8. Verfahren nach einem der vorhergehenden Ansprüche 1 bis 6, **dadurch gekennzeichnet, dass** die Lenkung eine Steer-by-Wire-Lenkung ist und die Kennlinie (5,6) die Abhängigkeit des vom Feedback-Aktuator bereitgestellten Lenkmoments von dem Lenkwinkel wiedergibt.

9. Verfahren nach Anspruch 8, **dadurch gekennzeichnet, dass** die Anpassung der Kennlinie eine Addition einer Konstanten umfasst, wobei insbesondere die Konstante von der Lenkgeschwindigkeit ($\dot{\varphi}_{STW}$) abhängig ist.

10. Steer-by-Wire-Lenksystem für Kraftfahrzeuge mit einem auf die gelenkten Räder wirkenden, in Abhängigkeit von einem Fahrerlenk-wunsch elektronisch geregelten Lenksteller, der mittels eines Zahnstangen-Lenkgetriebes auf die gelenkten Räder wirkt, mit einem Rückwirkungen der Straße auf ein Lenkrad übertragenden Feedback-Aktuator, wobei der Feedback-Aktuator ein Lenkmoment in Abhängigkeit eines Lenkwinkels mittels wenigstens zweier Kennlinien bereitstellt, **dadurch gekennzeichnet, dass** eine erste Kennlinie für hohe Lenkgeschwindigkeiten (6) und eine zweite Kennlinie für niedrigere Lenkgeschwindigkeiten (5) vorgesehen sind, wobei die erste Kennlinie (6) eine kleinere maximale Änderung der Steigung aufweist, als die zweite Kennlinie (5).

11. Steer-by-Wire-Lenksystem (1) nach Anspruch 10, **dadurch gekennzeichnet, dass** die erste Kennlinie (6) mittels der zweiten Kennlinie (5) berechnet ist.

12. Steer-by-Wire-Lenksystem nach Anspruch 10 oder 11, **dadurch gekennzeichnet, dass** die Anpassung der Kennlinie eine Addition einer Konstanten umfasst, wobei insbesondere die Konstante von der Lenkgeschwindigkeit ($\dot{\varphi}_{STW}$) abhängig ist.

13. Elektromechanisches Lenksystem für ein Kraftfahrzeug aufweisend ein mit einer unteren Lenkwelle verbundenes Lenkritzel, welches mit einer in einem Gehäuse entlang einer Längsachse verschieblich gelagerten Zahnstange zur Lenkung von Rädern in Eingriff steht, wenigstens einen Elektromotor zur Lenkkraftunterstützung, wobei die Lenkkraftunterstützung mittels wenigstens zweier Kennlinien (1,2,3,4), die Basisdrehmomentkurven (3,4) oder Lenksäulendrehmomentsteuerungskurven (1,2) sind, bestimmt ist, **dadurch gekennzeichnet, dass** eine erste Kennlinie für hohe Lenkgeschwindigkeiten (2,4) und eine zweite Kennlinie für niedrigere Lenkgeschwindigkeiten (1,3) vorgesehen sind, wobei die erste Kennlinie (2,4) eine kleinere maximale Änderung der Steigung aufweist, als die zweite Kennlinie (1,3).

14. Elektromechanisches Lenksystem nach Anspruch 13, **dadurch gekennzeichnet, dass** die erste Kennlinie (2,4) mittels der zweiten Kennlinie (1,3) durch Skalierung der X-Achse berechnet ist.

15. Elektromechanisches Lenksystem nach Anspruch 14, **dadurch gekennzeichnet, dass** bei Verwendung einer Basisdrehmomentkurve (3) die X-Achse gestreckt ist und bei Verwendung einer Lenksäulendrehmomentsteuerungskurve (1) die X-Achse gestaucht ist.

**Claims**

1. A method for operating a steering system of a motor vehicle, in the case of which method a steering force assistance or a countertorque which is introduced by a feedback actuator into a steering handle generates a steering feel in a manner which is dependent on a driver-side manual torque which is applied to the steering handle, the steering feel being shown by means of a characteristic curve (1, 2, 3, 4, 5, 6) which is adapted in a manner which is dependent on the steering speed ($\dot{\varphi}_{STW}$), **characterized in that** the characteristic curve (1, 3, 5) is adapted in the case of steering speeds above 150°/s in such a way that the adapted characteristic curve (2, 4, 6) has a smaller maximum change of the gradient than the characteristic curve in the case of lower steering speeds (1, 3, 5).

2. The method as claimed in claim 1, **characterized in that** the adaptation of the characteristic curve takes place in the case of steering speeds above 200°/s.

3. The method as claimed in claim 1 or 2, **characterized in that** the adaptation of the characteristic curve takes place in the case of steering speeds in a range from 200°/s to 300°/s.

4. The method as claimed in one of the preceding claims, **characterized in that** the adaptation of the characteristic curve comprises rescaling of the X-axis.

5. The method as claimed in one of the preceding claims, **characterized in that** the adaptation of the characteristic curve comprises rescaling of the X-axis in the region of the zero crossing of the characteristic curve.

6. The method as claimed in one of the preceding claims, **characterized in that** the characteristic curves (1, 2, 3, 4, 5, 6) are base functions.

7. The method as claimed in one of the preceding claims, **characterized in that** the steering system is an electromechanical steering system, and the characteristic curve is a base torque curve (3, 4) or a steering column torque control curve (1, 2).

8. The method as claimed in one of the preceding claims 1 to 6, **characterized in that** the steering system is a steer-by-wire steering system, and the characteristic curve (5, 6) reproduces the dependence of the steering torque which is provided by the feedback actuator on the steering angle.

9. The method as claimed in claim 8, **characterized in that** the adaptation of the characteristic curve comprises an addition of a constant, wherein in particular the constant is dependent on the steering speed ($\dot{\varphi}_{STW}$).

10. A steer-by-wire steering system for motor vehicles with a steering actuator which acts on the steered wheels, is regulated electronically in a manner which is dependent on a driver's steering request, and acts on the steered wheels by means of a rack and pinion steering gear, with a feedback actuator which transmits feedback effects of the road to a steering wheel, the feedback actuator providing a steering torque in a manner which is dependent on a steering angle by means of at least two characteristic curves, **characterized in that** a first characteristic curve is provided for high steering speeds (6) and a second characteristic curve is provided for lower steering speeds (5), the first characteristic curve (6) having a smaller maximum change of the gradient than the second characteristic curve (5).

11. The steer-by-wire steering system (1) as claimed in claim 10, **characterized in that** the first characteristic curve (6) is calculated by means of the second characteristic curve (5).

12. The steer-by-wire steering system as claimed in claim 10 or 11, **characterized in that** the adaptation of the characteristic curve comprises an addition of a constant, wherein in particular the constant is dependent on the steering speed ($\dot{\varphi}_{STW}$).

13. An electromechanical steering system for a motor vehicle having a steering pinion which is connected to a lower steering shaft and is in engagement with a rack which is mounted in a housing such that it can be displaced along a longitudinal axis, for the steering of wheels, and at least one electric motor for steering force assistance, the steering force assistance being defined by means of at least two characteristic curves (1, 2, 3, 4) which are base torque curves (3, 4) or steering column torque control curves (1, 2), **characterized in that** a first characteristic curve is provided for high steering speeds (2, 4) and a second characteristic curve is provided for lower steering speeds (1, 3), the first characteristic curve (2, 4) having a smaller maximum change of the gradient than the second characteristic curve (1, 3).

14. The electromechanical steering system as claimed in claim 13, **characterized in that** the first characteristic curve (2, 4) is calculated by means of the second characteristic curve (1, 3) by way of scaling of the X-axis.

**15.** The electromechanical steering system as claimed in claim 14, **characterized in that**, in the case of the use of a base torque curve (3), the X-axis is stretched and, in the case of the use of a steering column torque control curve (1), the X-axis is compressed.

## Revendications

**1.** Procédé pour faire fonctionner une direction d'un véhicule à moteur, selon lequel, en fonction d'un couple manuel côté conducteur appliqué sur une manette de direction, une assistance de direction ou un couple antagoniste introduit par un actionneur à rétroaction dans la manette de direction produit une sensation de direction, la sensation de direction étant représentée au moyen d'une courbe caractéristique (1,2,3,4,5,6) qui est adaptée en fonction de la vitesse de direction ($\varphi_{STW}$), **caractérisé en ce que** la courbe caractéristique (1,3,5) est adaptée pour des vitesses de direction supérieures à 150°/s, de telle sorte que la courbe caractéristique (2,4,6) adaptée présente une variation maximale de la pente inférieure à celle de la courbe caractéristique correspondant à des vitesses de direction inférieures (1,3,5).

**2.** Procédé selon la revendication 1, **caractérisé en ce que** l'adaptation de la courbe caractéristique est effectuée pour des vitesses de direction supérieures à 200°/s.

**3.** Procédé selon la revendication 1 ou 2, **caractérisé en ce que** l'adaptation de la courbe caractéristique est effectuée pour des vitesses de direction comprises dans une plage de 200°/s à 300°/s.

**4.** Procédé selon l'une quelconque des revendications précédentes, **caractérisé en ce que** l'adaptation de la courbe caractéristique comprend une remise à l'échelle de l'axe X.

**5.** Procédé selon l'une quelconque des revendications précédentes, **caractérisé en ce que** l'adaptation de la courbe caractéristique comprend une remise à l'échelle de l'axe X dans la zone du passage à zéro de la courbe caractéristique.

**6.** Procédé selon l'une quelconque des revendications précédentes, **caractérisé en ce que** les courbes caractéristiques (1,2,3,4,5,6) sont des fonctions de base.

**7.** Procédé selon l'une quelconque des revendications précédentes, **caractérisé en ce que** la direction est une direction électromécanique et **en ce que** la courbe caractéristique est une courbe de couple de base (3,4) ou une courbe de commande de couple de colonne de direction (1,2).

**8.** Procédé selon l'une quelconque des revendications 1 à 6 précédentes, **caractérisé en ce que** la direction est une direction de type Steer-by-Wire et **en ce que** la courbe caractéristique (5,6) reproduit la dépendance du couple de direction fourni par l'actionneur à rétroaction par rapport à l'angle de direction.

**9.** Procédé selon la revendication 8, **caractérisé en ce que** l'adaptation de la courbe caractéristique comprend une addition d'une constante, la constante dépendant notamment de la vitesse de direction ($\dot{\varphi}_{STW}$).

**10.** Système de direction de type Steer-by-Wire pour véhicules à moteur comprenant un régulateur de direction agissant sur les roues directrices, régulé électroniquement en fonction d'un souhait de direction du conducteur, qui agit sur les roues directrices au moyen d'un mécanisme de direction à crémaillère, comportant un actionneur à rétroaction transmettant des réactions de la route à un volant de direction, l'actionneur à rétroaction fournissant un couple de direction en fonction d'un angle de direction au moyen d'au moins deux courbes caractéristiques, **caractérisé en ce qu'**il est prévu une première courbe caractéristique pour des vitesses de direction élevées (6) et une deuxième courbe caractéristique pour des vitesses de direction plus faibles (5), la première courbe caractéristique (6) présentant une variation maximale de la pente inférieure à celle de la deuxième courbe caractéristique (5).

**11.** Système de direction de type Steer-by-Wire (1) selon la revendication 10, **caractérisé en ce que** la première courbe caractéristique (6) est calculée au moyen de la deuxième courbe caractéristique (5).

**12.** Système de direction de type Steer-by-Wire selon la revendication 10 ou 11, **caractérisé en ce que** l'adaptation de la courbe caractéristique comprend une addition d'une constante, la constante étant notamment fonction de la vitesse de direction ($\dot{\varphi}_{STW}$).

**13.** Système de direction électromécanique pour un véhicule à moteur, comportant un pignon de direction relié à un arbre de direction inférieur, qui est en prise avec une crémaillère montée coulissante dans un boîtier le long d'un axe longitudinal pour diriger des roues, au moins un moteur électrique pour l'assistance de direction, l'assistance de direction étant déterminée au moyen d'au moins deux courbes caractéristiques (1,2,3,4) qui sont des courbes de couple de base (3,4) ou des courbes de commande de couple de colonne de direction (1,2), **caractérisé en ce qu'**il est prévu une première courbe caractéristique pour des vitesses de direction élevées (2,4) et une deuxième courbe caractéristique pour des vitesses de direction plus faibles (1,3), la première courbe caractéristique (2,4) présentant une variation maximale de la pente inférieure à celle de la deuxième courbe caractéristique (1,3).

**14.** Système de direction électromécanique selon la revendication 13, **caractérisé en ce que** la première courbe caractéristique (2,4) est calculée au moyen de la deuxième courbe caractéristique (1,3) par mise à l'échelle de l'axe X.

**15.** Système de direction électromécanique selon la revendication 14, **caractérisé en ce que**, lors de l'utilisation d'une courbe de couple de base (3), l'axe X est étiré et lors de l'utilisation d'une courbe de commande de couple de colonne de direction (1), l'axe X est comprimé.

Figur 1

Figur 2

Figur 3

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 20030121713 A1
- US 20040226770 A1
- DE 10325587 A1